# EUROPÄISCHE PATENTSCHRIFT

(11) **EP 2 064 090 B1**
(45) Veröffentlichungstag und Bekanntmachung des Hinweises auf die Patenterteilung: **10.02.2010**
(21) Anmeldenummer: 07801531.0
(22) Anmeldetag: 07.08.2007
(51) Int. Cl.: B60R 13/10

(54) **KRAFTFAHRZEUGKENNZEICHEN**
MOTOR VEHICLE LICENSE PLATE
PLAQUE D'IMMATRICULATION

(30) Priorität: 19.09.2006 DE 102006044584
(43) Veröffentlichungstag der Anmeldung: 03.06.2009
(73) Patentinhaber: J.H. Tönnjes E.A.S.T. GmbH & Co. KG, 27751 Delmenhorst (DE)
(72) Erfinder: BEENKEN, Björn, 27777 Ganderkesee-Rethorn (DE); BETZ, Jochen, 28211 Bremen (DE)
(74) Vertreter: Möller, Friedrich
(86) Internationale Anmeldenummer: PCT/EP2007/006955
(87) Internationale Veröffentlichungsnummer: WO 2008/034491

(56) Entgegenhaltungen:
- EP-A- 1 550 991
- WO-A-99/19170
- US-A- 5 255 767
- US-A- 5 608 391
- US-A1- 2004 070 505

## Beschreibung

Die Erfindung betrifft ein Kraftfahrzeugkennzeichen gemäß dem Oberbegriff des Anspruchs 1 bzw. 20.

Bei Kennzeichenschildern von Kraftfahrzeugen besteht die Gefahr, dass sie vom Kraftfahrzeug, wozu sie gehören, abmontiert und an einem anderen Kraftfahrzeug befestigt werden. Um solchen Manipulationen entgegenzuwirken, ist man bemüht, Kennzeichenschilder derart am Kraftfahrzeug zu befestigen, dass entweder ein Lösen nahezu unmöglich ist oder das ganze Kennzeichenschild zerstört bzw. Teile desselben beschädigt werden, so dass eine Anbringung eines solchen Kennzeichenschilds an einem anderen Fahrzeug nicht möglich oder zumindest die Manipulation deutlich erkennbar ist.

Die Erfindung bezieht sich auf ein Kraftfahrzeugkennzeichen, das aus einem Kennzeichenschild und einer dieses tragende Halterung gebildet ist. Solche Halterungen für Kennzeichenschilder werden zum einen eingesetzt, um die Montage des Kennzeichenschilds am Fahrzeug überhaupt zu ermöglichen oder zu vereinfachen. Vor allem werden solche Halterungen auch vielfach eingesetzt, um zusätzliche fiskale Bestandteile des Kraftfahrzeugkennzeichens, die auf dem Kennzeichenschild selbst nicht unterbringbar sind, aufzunehmen. Bei Kraftfahrzeugkennzeichen aus einem Halter und einem Kennzeichenschild müssen sowohl die Halterung als auch das Kennzeichenschild und vor allem die Verbindung des Kennzeichenschilds mit der Halterung so beschaffen sein, dass eine Demontage vor allem des Kennzeichenschilds nahezu unmöglich ist oder zur Beschädigung des Kennzeichenschilds oder anderer Sicherheitsmerkmale führt, so dass eine Wiederverwendung des abmontierten Kennzeichenschilds nicht möglich oder deutlich visuell wahrnehmbar ist. Die bisher getroffenen Maßnahmen zur Erfüllung der genannten Voraussetzungen bei Kraftfahrzeugkennzeichen aus einer Halterung und einem Kennzeichenschild sind entweder sehr aufwendig oder unzureichend.

Ein Kraftfahrzeugkennzeichen gemäß dem Oberbegriff des Anspruchs 1 ist aus der US-A-5 255 767 bekannt, und ein Kraftfahrzeugkennzeichen gemäß dem Oberbegriff des Anspruchs 20 aus der US-A-5 608 391.

Der Erfindung liegt die Aufgabe zugrunde, ein Kraftfahrzeugkennzeichen zu schaffen, das mit einfachen Mitteln eine Demontage verhindert und/oder keine Wiederverwendung eines demontierten Kraftfahrzeugkennzeichens zulässt.

Ein Kraftfahrzeugkennzeichen zur Lösung dieser Aufgabe weist die Merkmale des Anspruchs 1 auf. Demnach ist vorgesehen, dass die Halterung mindestens einen Vorsprung und das Kennzeichenschild einen mit dem jeweiligen Vorsprung korrespondierenden Durchbruch aufweist, in den ein oberer Teil des Vorsprungs eingreift. Weiterhin sind der Vorsprung sowie ein dieser umgebender Randbereich des Durchbruchs von einem Aufkleber verdeckt. Dieser Aufkleber verbindet unter Zuhilfenahme des Vorsprungs die Halterung mit dem Kennzeichenschild. Wird nach dem Aufbringen des Aufklebers auf den Vorsprung und den den Durchbruch umgebenden Randbereich des Kennzeichenschilds letzteres von der Halterung demontiert, wird der Aufkleber zerstört. Beim Anbringen des Kennzeichenschilds an ein anderes Fahrzeug wird die Zerstörung des Aufklebers deutlich sichtbar. Weil der Aufkleber üblicherweise von einer dazu autorisierten Stelle, insbesondere einer Behörde, mit der Zulassung des Fahrzeugs, wozu das Kraftfahrzeugkennzeichen gehört, vergeben wird, ist eine Ersatzbeschaffung im Falle eines unbefugten Anbaus des Kraftfahrzeugkennzeichens an ein anderes Fahrzeug nicht möglich. Das erfindungsgemäße Kraftfahrzeugkennzeichen lässt sich deshalb unauffällig nicht an ein anderes Fahrzeug anbringen.

Der Aufkleber ist vorzugsweise so ausgebildet, dass er sich nur in Teilen vom Vorsprung und den diesen umgebenden Randbereich um den Durchbruch des Kennzeichenschilds lösen lässt. Das führt nach dem unbefugten Lösen des Kennzeichenschilds vom dazugehörenden Kraftfahrzeug und Anbringen an ein anderes Kraftfahrzeug dazu, dass nur noch ein Teil des Aufklebers sichtbar ist und dadurch der unbefugte Umbau des Kennzeichenschilds deutlich erkennbar ist.

Gemäß einer bevorzugten Ausgestaltung der Erfindung ist vorgesehen, dass eine eben ausgebildete Oberseite des Vorsprungs der Halterung etwa bündig mit der sichtbaren Vorderseite des Kennzeichenschilds abschließt. Auf diese Weise wird eine ebene und quasi durchgehende Fläche zur Aufbringung des Aufklebers geschaffen. Der Aufkleber verdeckt sozusagen den in den Durchbruch des Kennzeichenschilds hineinragenden Vorsprung der Halterung. Die Folge ist, dass jemand, der das Kennzeichenschild abmontieren will, nicht so leicht erkennt, dass er damit das Kraftfahrzeugkennzeichen für einen anderweitigen Gebrauch ungeeignet macht. Außerdem wirkt es optisch ansprechend, wenn sich der Aufkleber ebenflächig auf dem Kraftfahrzeugkennzeichen befindet.

Der Aufkleber ist des Weiteren so ausgebildet, dass er sich ohne eine sichtbare Beschädigung oder Zerstörung weder von der Oberseite des Vorsprungs noch vom den Vorsprung umgebenden Randbereich der Ausnehmung im Kennzeichenschild lösen lässt. Diese Eigenschaft des Aufklebers wird im Folgenden kurz als "unlösbar" bezeichnet. Das soll nicht die einschränkende Bedeutung haben, dass der Aufkleber tatsächlich unlösbar ist. Entscheidend ist, dass er - wenn er lösbar ist - ganz oder teilweise zerrissen oder zerstört wird.

Der mindestens eine Vorsprung auf der Vorderseite der Halterung ist bevorzugt integraler Bestandteil der Halterung, indem er entweder einstückig an die Halterung angeformt ist oder zwar als separates Teil ausgebildet, aber dauerhaft mit der Halterung verbunden ist, durch beispielsweise Nieten, Schweißen, Kleben oder unlösbares Verrasten. Auf diese Weise wird verhindert, dass das Kennzeichenschild zusammen mit dem Vorsprung und einem dadurch unzerstörten Aufkleber von der Halterung trennbar ist, was einen unsichtbaren Umbau des Kennzeichenschilds zulassen würde.

Gemäß einer bevorzugten Ausgestaltung des Kraftfahrzeugkennzeichens ist vorgesehen, das Kennzeichenschild formschlüssig mit der Halterung unlösbar zu verbinden. Diese unlösbare formschlüssige Verbindung kann auf verschiedene Weise herbeigeführt werden, vorzugsweise durch einen oder mehrere stiftartige Verbindungsmittel, die durch eine Durchgangsbohrung im Kennzeichenschild gesteckt und mit der Halterung unlösbar befestigt sind. Diese Befestigung kann durch Rasten, Nieten, Kleben oder auch Schweißen erfolgen. Das hat eine zusätzliche Sicherung des Kennzeichenschilds an der Halterung zur Folge. Es müssten die Stifte oder sonstige stiftartige Verbindungsmittel zerbrochen oder ausgebohrt werden, um das Kennzeichenschild von der Halterung zu trennen. Derartiges ist zeitaufwendig und nur mit entsprechendem Werkzeug machbar, was Unbefugte zusätzlich davon abhält, das Kennzeichenschild vom Kraftfahrzeug zu entfernen. Außerdem besteht bei einer solchen gewaltsamen Entfernung des Kennzeichenschilds von der Halterung die Gefahr der Zerstörung des Kennzeichenschilds, so dass dieses nach der Demontage nicht wiederverwendbar ist.

Gemäß einer anderen bevorzugten Ausgestaltung des Kraftfahrzeugkennzeichens ist vorgesehen, vorzugsweise der Halterung, gegebenenfalls auch dem Kennzeichenschild, mindestens ein elektronisches Identifikationsmittel zuzuordnen. Dieses elektronische Identifikationsmittel ist vorzugsweise nach Art eines Transponders ausgebildet, das heißt, es verfügt über einen Datenspeicher und einen Sender. Die im elektronischen Identifikationsmittel abgespeicherten Daten, und zwar entweder alle Daten oder nur ausgewählte Daten, die auf das Kraftfahrzeug, wofür das Kraftfahrzeugkennzeichen vorgesehen ist, abgestimmt sind, können von einem Empfänger erfasst werden. Beispielsweise kann dadurch der Standort des Kraftfahrzeugs ermittelt werden, zu dem das Kraftfahrzeugkennzeichen gehört.

Bevorzugt ist das elektronische Identifikationsmittel in einem geschlossenen und vorzugsweise nicht zu öffnenden Gehäuse angeordnet. Das Gehäuse umgibt das Identifikationsmittel vollständig und schützt es dadurch vor äußeren mechanischen Einflüssen und Manipulationen. Mit dem Gehäuse ist das elektronische Identifikationsmittel in einer korrespondierenden Vertiefung der Halterung angeordnet. Die Halterung bildet dadurch einen Aufnahmeraum für das einzige oder gegebenenfalls auch mehrere Identifikationsmittel. Das Kennzeichenschild kann dabei zur Abdeckung des elektronischen Identifikationsmittels dienen. Denkbar ist es auch, die Vertiefung in einem vom Kennzeichenschild frei gelassenen Bereich der Vorderseite der Halterung anzuordnen. Das Gehäuse des elektronischen Identifikationsmittels ist dann vom Kennzeichenschild frei gelassen. Dieser frei gelassene Bereich ermöglicht es, einen Aufkleber vorzusehen, der die Oberseite des Gehäuses und einen dieses umgebenden Randbereich der Vertiefung an der Vorderseite der Halterung überdeckt. Dadurch kann das elektronische Identifikationsmittel nicht oder nur mit einer Zerstörung des Aufklebers von der Halterung getrennt werden. Eine solche Halterung wäre dann nicht wiederverwendbar.

Bei einer Weiterbildung des zuvor beschriebenen Kraftfahrzeugkennzeichens ist vorgesehen, die Halterung mehrteilig auszubilden. Bevorzugt ist die Halterung mindestens gebildet aus einem Halterungsunterteil und einem damit verbundenen Halterungsoberteil. Gegebenenfalls kann vor dem Halterungsoberteil noch ein Rahmen vorgesehen sein. Die mehrteilige Halterung ermöglicht es, auf einfache Weise mindestens einen Vorsprung und/oder mindestens ein elektronisches Identifikationsmittel unlösbar mit der Halterung zu verbinden. Das mindestens eine elektronische Identifikationsmittel und/oder der wenigstens eine Vorsprung können so formschlüssig zwischen dem Halterungsoberteil und dem Halterungsunterteil angeordnet bzw. befestigt werden. Die dazu erforderliche unlösbare Verbindung des Halterungsoberteils mit dem Halterungsunterteil kann einfach erfolgen, weil beide verhältnismäßig großflächig ausgebildet sind. Das Halterungsoberteil und das Halterungsunterteil können beispielsweise großflächig verklebt oder auch verschweißt werden. Es ist auch denkbar, beide Teile der Halterung durch rastende Stifte oder Niete unlösbar zu verbinden.

Bei einem Kraftfahrzeugkennzeichen, dessen Halterung einen Vorsprung aufweist, ist bevorzugt der Vorsprung auf dem Halterungsunterteil vorgesehen. Der Vorsprung erstreckt sich dann durch eine korrespondierende Ausnehmung im Halterungsoberteil hindurch. Bevorzugt ist der Vorsprung so ausgebildet, dass er sich auch durch eine korrespondierende Ausnehmung oder einen Durchbruch im Kennzeichenschild hindurch erstreckt, so dass der Vorsprung vom Halterungsunterteil aus das gesamte Halterungsoberteil durchgreift und auch in die Ausnehmung im Kennzeichenschild hineinragt. Dadurch kann auf die Vorderseite des Kennzeichenschilds ein Aufkleber aufgebracht werden, der die flache Oberseite des Vorsprungs, und einen diesen umgebenden Randbereich der Ausnehmung des Kennzeichenschilds überdeckt und mit dem Randbereich des Kennzeichenschilds und der Oberseite des Vorsprungs dauerhaft durch Festkleben verbunden ist. Der Vorsprung kann formschlüssig zwischen dem Plattenoberteil und dem Plattenunterteil festgelegt sein. Es ist aber auch denkbar, den Vorsprung einstückig an das Halterungsunterteil anzuformen oder den Vorsprung mit dem Halterungsunterteil unlösbar durch Kleben, Schweißen, Nieten oder Rasten zu verbinden. Auf diese Weise ist zuverlässig eine unlösbare Verbindung des Vorsprungs mit dem Halterungsunterteil gewährleistet. Alternativ ist es auch denkbar, den Vorsprung dem Halterungsoberteil unlösbar zuzuordnen.

Ein weiteres Kraftfahrzeugkennzeichen zur Lösung der eingangs genannten Aufgabe weist die Merkmale des Anspruchs 20 auf. Herbei kann es sich auch um bevorzugte Weiterbildungen der zuvor beschriebenen Kraftfahrzeugkennzeichen handeln. Dadurch, dass das mindestens eine der Halterung zugeordnete elektronische Identifikationsmittel in einen Durchbruch des Kennzeichenschilds hineinragt und das elektronische Identifikationsmittel sowie ein den Durchbruch umgebender Randbereich des Kennzeichenschilds von einem Aufkleber verdeckt sind, kann das Kennzeichenschild allein nicht vom Kraftfahrzeug entfernt werden, weil dabei der Aufkleber zerstört würde, was beim anderweitigen Gebrauch des Kennzeichenschilds sichtbar wäre. Das Kennzeichenschild könnte mit unversehrtem Aufkleber zusammen mit dem elektronischen Identifikationsmittel vom Kraftfahrzeug entfernt werden. Wird das Kennzeichenschild zusammen mit dem elektronischen Identifikationsmittel dann bei einem anderen Kraftfahrzeug verwendet, würde das auffallen, weil die Daten dann nicht mehr zu dem Kraftfahrzeug passen, weil dieses mit dem falschen Kraftfahrzeugkennzeichen versehen ist.

Bevorzugt ist das mindestens eine elektronische Identifikationsmittel in einem Gehäuse angeordnet. Das Gehäuse schützt das elektronische Identifikationsmittel vor äußeren Einflüssen und Manipulationen. Das Gehäuse verfügt vorzugsweise über eine mindestens zum Teil ebene Oberseite, die in einen dazu korrespondierenden Durchbruch im Kennzeichenschild eingreift. Dabei ist das Gehäuse so bemessen, dass die ebenere Oberseite etwa bündig mit einer Vorderseite des Kennzeichenschilds abschließt. Dadurch kann der Aufkleber ebenflächig auf die Oberseite des Gehäuses für das elektronische Identifikationsmittel und den das Gehäuse umgebenden Randbereich des Durchbruchs des Kennzeichenschilds aufgeklebt werden.

Das Gehäuse zur Aufnahme des mindestens einen elektronischen Identifikationsmittels ist in einer Ausnehmung der Halterung angeordnet. Dabei kann das Gehäuse von der Rückseite der Halterung formschlüssig in der Ausnehmung angeordnet sein. Es ist aber auch denkbar, das Gehäuse in eine nur an der zum Kennzeichenschild weisenden Vorderseite der Halterung offenen Ausnehmung einzusetzen und in dieser dauerhaft zu befestigen durch Einkleben, Eingießen, Festschweißen, Rasten und/oder Nieten. Auf diese Weise bilden das Gehäuse mit dem elektronischen Identifikationsmittel und die Halterung des erfindungsgemäßen Kraftfahrzeugkennzeichens eine Einheit. Dadurch lässt sich das Kennzeichenschild nur unter Zerstörung des Aufklebers von der Halterung trennen; es ist aber nicht möglich, dass Kennzeichenschild zusammen mit dem Gehäuse des elektronischen ldentifikationsmittels ohne eine Zerstörung des Aufklebers als Ganzes von der Halterung zu entfernen, oder das Gehäuse von der Halterung zu trennen.

Weitere bevorzugte Ausgestaltungen des erfindungsgemäßen Kraftfahrzeugkennzeichens enthalten die Unteransprüche.

Bevorzugte Ausführungsbeispiele des Kraftfahrzeugkennzeichens werden nachfolgend anhand der Zeichnung näher erläutert. In dieser zeigen:
- Fig. 1: eine Vorderansicht des Kraftfahrzeugkennzeichens nach einem ersten Ausführungsbeispiel der Erfindung,
- Fig. 2: eine perspektivische Explosionszeichnung der Teile des Kraftfahrzeugkennzeichens der Fig. 1,
- Fig.3: eine Vorderansicht auf ein Kraftfahrzeugkennzeichen nach einem zweiten Ausführungsbeispiel der Erfindung,
- Fig. 4: eine perspektivische Explosionsdarstellung der Einzelteile des Kraftfahrzeugkennzeichens der Fig. 3,
- Fig. 5: eine perspektivische Darstellung auf die Vorderseite eines Kraftfahrzeugkennzeichens nach einem dritten Ausführungsbeispiel der Erfindung,
- Fig. 6: eine explosionsartige perspektivische Darstellung der Einzelteile des Kraftfahrzeugkennzeichens der Fig. 5,
- Fig.7: ein viertes Ausführungsbeispiel eines Kraftfahrzeugkennzeichens in einer Vorderansicht, und
- Fig. 8: einen Querschnitt VIII-VIII durch das Kraftfahrzeugkennzeichen der Fig. 7.

Bei den gezeigten Ausführungsbeispielen des erfindungsgemäßen Kraftfahrzeugkennzeichens handelt es sich um solche, die aus einem Kennzeichenschild und einer Halterung gebildet sind. Das Kennzeichenschild ist fest mit der Halterung verbunden. Die Kraftfahrzeugkennzeichen sind so ausgebildet, dass sie als "diebstahlsicher" gelten.

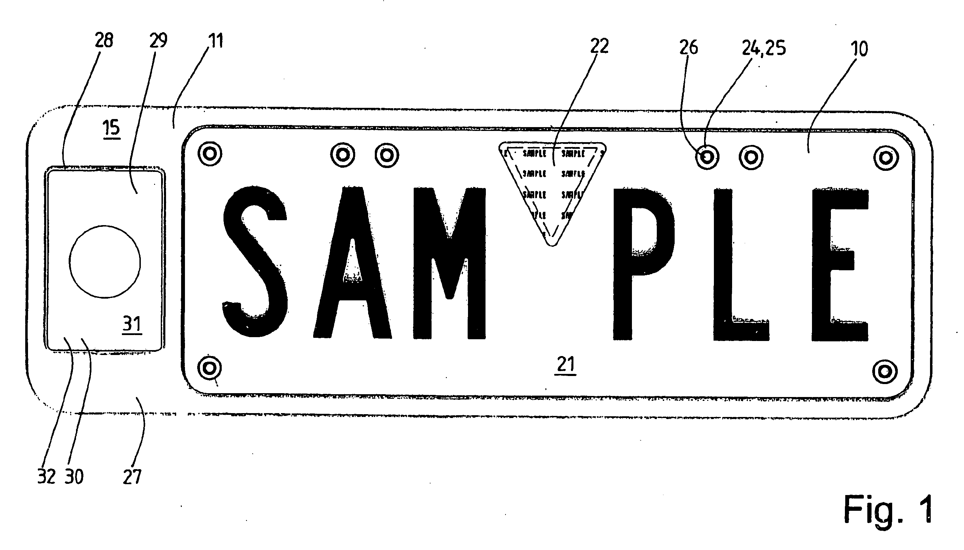

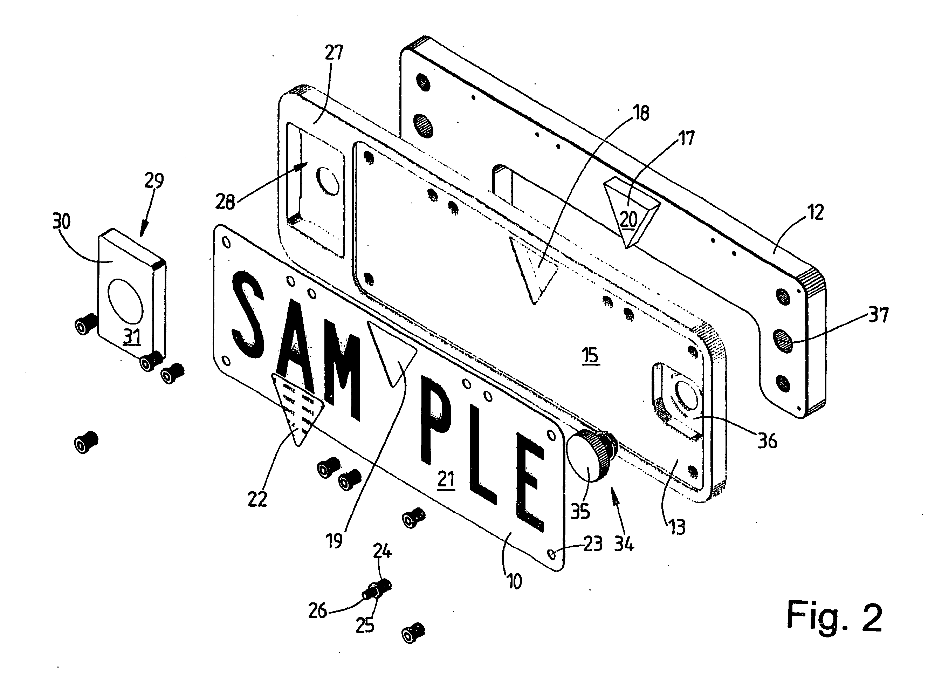

Das in den Fig. 1 und 2 gezeigte Kraftfahrzeugkennzeichen weist ein Kennzeichenschild 10 und eine mehrteilige Halterung 11 auf. Die Halterung 11 trägt das Kennzeichenschild 10. Beim hier gezeigten Ausführungsbeispiel ist die Halterung 11 zweiteilig ausgebildet, setzt sich nämlich aus einem Halterungsunterteil 12 und einem Halterungsoberteil 13 zusammen. Das Kennzeichenschild 10 ist auf der Vorderseite 15 des Halterungsoberteils 13 befestigt.

Das Halterungsunterteil 12 weist an seiner an der Unterseite des Halterungsoberteils 13 anliegenden Vorderseite einen Vorsprung 17 auf, der im gezeigten Ausführungsbeispiel über eine dreieckförmige Fläche verfügt. Der Vorsprung 17 kann aber auch beliebige andere Flächen aufweisen, beispielsweise rund, viereckig oder oval sein. Der Vorsprung 17 ist unlösbar mit dem Halterungsunterteit 12 verbunden. Dazu kann der Vorsprung 17 einstückig an das Halterungsunterteil 12 angeformt sein. Es ist aber auch möglich, den Vorsprung 17 auf der Vorderseite des Halterungsunterteils 12 durch Kleben, Schweißen, Rasten oder Schrauben unlösbar zu befestigen. Das Halterungsunterteil 12 ist unlösbar mit dem Fahrzeug, wozu das Kraftfahrzeugkennzeichen gehört, verbunden. Beispielsweise ist das Halterungsunterteil 12 von der Innenseite des Fahrzeugs an ein Karosserieteil oder vom Stoßfänger her durch nach der Montage unzugängliche Schrauben mit dem Kraftfahrzeug verbunden. Dadurch kann das Halterungsunterteil 12 nicht unbefugt vom Kraftfahrzeug demontiert werden, ohne dass dazu das Kraftfahrzeug geöffnet oder Teile desselben demontiert werden.

Das Halterungsoberteil 13 verfügt über einen Durchbruch 18, der eine Grundfläche aufweist, die korrespondierend zur Grundfläche des Vorsprungs 17 ausgebildet ist, also im gezeigten Ausführungsbeispiel ebenfalls dreieckförmig ist. Auch im Kennzeichenschild 10 ist ein mit dem Vorsprung 17 korrespondierender, hier dreieckförmiger, Durchbruch 19 angeordnet. Der Durchbruch 19 ist so positioniert, dass er sich im gezeigten Ausführungsbeispiel nahe des oberen (längeren) Querrands in der Mitte des Kennzeichenschilds 10 befindet. Je nach Art des Kraftfahrzeugkennzeichens kann der Durchbruch 19 aber auch an einer anderen Stelle des Kennzeichenschilds 10 befinden. Die Höhe des Vorsprungs 17 ist so bemessen, dass er sich durch den Durchbruch 18 im Halterungsoberteil 13 und den Durchbruch 19 im Kennzeichenschild 10 erstreckt, wobei eine ebene Oberseite 20 des Vorsprungs 17 etwa bündig mit einer sichtbaren Vorderseite 21 des Kennzeichenschilds 10 abschließt. Die Oberseite 20 des Vorsprungs17 schließt also den Durchbruch 19 im Kennzeichenschild 10 und bildet im Bereich des Durchbruchs 19 einen Teil der Vorderseite 21 des Kennzeichenschilds 10.

Im Bereich des Vorsprungs 17 ist auf der Vorderseite 21 des Kennzeichenschilds 10 ein Aufkleber 22 angeordnet. Beim hier gezeigten Kraftfahrzeugkennzeichen weist der Aufkleber 22 wie der Vorsprung 17 eine dreieckförmige Gestalt auf. Die Fläche des Aufklebers 22 ist aber etwas größer als die Dreieckfläche des Vorsprungs 17. Auf diese Weise überdeckt der Aufkleber 22 die gesamte dreieckige Oberseite 20 des Vorsprungs 17 und einen Teilbereich der Vorderseite 21 des Kennzeichenschilds 10, nämlich einen den Durchbruch 19 im Kennzeichenschild 10 umgebenden, umlaufenden Randbereich desselben. Dadurch stellt der Aufkleber 22 eine Verbindung zwischen dem Kennzeichenschild 10 und der Halterung 11, nämlich dem untrennbar damit verbundenen Vorsprung 17 her. Der Aufkleber 22 ist so ausgebildet, dass er sich - wenn überhaupt - nicht zerstörungsfrei vom Kennzeichenschild 10 und dem Vorsprung 17 lösen kann. Entweder wird bei einem solchen Lösen der Aufkleber 22 durchtrennt oder er zerbricht. Zu diesem Zweck ist der Aufkleber 22 bevorzugt aus einer mehrschichtigen Laminatfolie gebildet, die beim Versuch, den Aufkleber 22 abzulösen, delaminiert und dabei zerstört wird. Ein solcher Aufkleber 22 ist so praktisch als "unlösbar" zu bezeichnen. Wenn im Folgenden von einem unlösbaren Aufkleber 22 die Rede ist, dann ist damit ein Aufkleber 22 gemeint, der sich zwar ganz oder teilweise ablösen lässt, dabei aber zerstört wird, so dass eine Wiederverwendung unmöglich ist.

Das Kennzeichenschild 10 weist kleine Durchgangsbohrung 23 auf (im gezeigten Ausführungsbeispiel acht Durchgangsbohrungen 23). Korrespondierende Sack- oder Durchgangsbohrungen sind im Halterungsoberteil 13 angeordnet Durch die Durchgangsbohrungen 23 des Kennzeichenschilds 10 werden Raststifte 24 gesteckt, die in den Bohrungen des Halterungsoberteils 13 festrasten. Mit einem oberen Kopf 25 liegen die Raststifte 24 an der sichtbaren Vorderseite 21 des Kennzeichenschilds 10 an. In die innen hohl ausgebildeten Raststifte 24 wird nach dem Festrasten des Kennzeichenschilds 10 auf dem Halterungsoberteil 13 ein dünner, nadelartiger Füllkörper 26 eingesteckt. Dieser füllt den inneren Hohlraum im Raststift 24 aus und führt zu einer unlösbaren formschlüssigen Verankerung der Raststifte 24 im Halterungsoberteil 13. Zusätzlich können die Füllkörper 26 in den Raststiften 24 verklebt sein. Infolge der Raststifte 24 und der darin eingesteckten Füllkörper 26 kommt es zu einer quasi unlösbaren Verbindung des Kennzeichenschilds 10 mit der Halterung 11, nämlich dem Halterungsoberteil 13. Aufgrund dieser Verbindung lässt sich das Kennzeichenschild 10 nur mit großem Aufwand durch Zerstörung der Raststifte 24 von der Halterung 11 trennen, was in der Regel auch eine Zerstörung des Kennzeichenschilds 10 herbeiführt, wodurch dieses für eine anderweitige Verbindung unbrauchbar wird.

Die gezeigte Halterung 11 weist auf einer Seite (in den Fig. 1 und 2 der linken Seite) neben dem Kennzeichenschild 10 eine von diesen nicht verdeckte Seitenfläche 27 auf. Die Seitenfläche 27 verfügt über eine etwa in der Mitte derselben angeordnete Ausnehmung 28, die von der zum Kennzeichenschild 10 weisenden Vorderseite 15 des Halterungsoberteils 13 ausgeht und eine Tiefe aufweist, die geringer ist.als die Dicke des Halterungsoberteils 13. Im gezeigten Ausführungsbeispiel verfügt die Ausnehmung 28 über eine etwa rechteckförmige Grundfläche. Die Ausnehmung 28 kann aber durchaus beliebige andere Grundflächen aufweisen.

Das hier gezeigte Kraftfahrzeugkennzeichen weist ein elektronisches Identifikationsmittel 29 auf, wobei es sich beispielsweise um eine Art Transponder handelt. Dazu verfügt das Identifikationsmittel 29 über einen Datenspeicher, einen Sender und eine Antenne. Der Datenspeicher ist bevorzugt als Festspeicher ausgebildet, so dass die darin einmal gespeicherten Daten nicht veränderbar sind. Denkbar wäre es aber, einige Daten im Datenspeicher so abzuspeichern, dass sie veränderbar sind. Die elektronischen Bauteile des Identifikationsmittels 29 sind vorzugsweise einschließlich einer eventuell erforderlichen Batterie in einem Gehäuse 30 untergebracht. Das Gehäuse 30 ist ringsherum geschlossen und so ausgebildet, dass es nicht geöffnet werden kann. In dem Gehäuse 30 sind alle elektronischen Bauteile (einschließlich einer eventuellen Batterie) des Identifikationsmittets 29 untergebracht. Das Gehäuse 30 ist so bemessen, dass es in der Ausnehmung 28 an der Vorderseite 15 des Halterungsoberteils 13 formschlüssig Aufnahme findet, insbesondere die Ausnehmung 28 mindestens nahezu vollständig ausfüllt. Eine sichtbare, ebene Oberseite 31 des Gehäuses 30 schließt dabei bündig mit der vom Kennzeichenschild 10 frei gelassenen Vorderseite 15 der Seitenfläche 27 des Halterungsoberteils 13 ab. Die Oberseite 31 des Gehäuses 30 des elektronischen ldentifikationsmittels 29 und ein dieser umgebender Rand der Ausnehmung 28 im Halterungsoberteil 13 sind von einem weiteren (nur in der Fig. 1 angedeuteten) Aufkleber 32 überdeckt. Der Aufkleber 32 verbindet auf diese Weise das Gehäuse 30 des elektronischen Identifikationsmittels 29 mit einem Teilbereich des Halterungsoberteils 13. Auch diese Verbindung ist unlösbar, indem der Aufkleber 32 die gleichen Eigenschaften aufweist, mit denen der Aufkleber 22 versehen ist. Auf die Ausführungen hierzu wird Bezug genommen.

Das Gehäuse 30 des elektronischen Identifikationsmittels 29 kann rastend in der Ausnehmung 28 des Halterungsoberteils 13 angeordnet sein. Es ist auch denkbar, das Gehäuse 30 in die Ausnehmung 28 einzukleben oder einzugießen.

Im gezeigten Ausführungsbeispiel ist die Rückseite des Gehäuses 30 mit einem in den Figuren nicht gezeigten Rastvorsprung versehen. Dieser erstreckt sich durch das Halterungsoberteil 13 hindurch in eine korrespondierende Bohrung im Halterungsunterteil 12. Auf diese Weise wird nicht nur unlösbar das Gehäuse 30 des elektronischen Identifikationsmittels 29 mit dem Halterungsoberteil 13 verbunden; es kommt auch gleichzeitig eine unlösbare Verbindung des Halterungsunterteils 12 mit dem Halterungsoberteil 13 durch den festen Rastvorsprung des unter dem Gehäuse 30 zustande. Das Gehäuse 30 dient dabei sozusagen als Kopf des Rastvorsprungs.

Ein zweiter Rastverbinder 34 ist auf der dem elektronischen Identifikationsmittel 29 gegenüberliegenden Seite der Halterung 11 vorgesehen. Dieser Rastverbinder 34 wird überdeckt vom Kennzeichenschild 10. Der Rastverbinder 34 liegt mit seinem Kopf 35 in einer Ausnehmung 36 des Halterungsoberteils 13. Der unter dem Kopf 35 liegende Rastvorsprung des Rastverbinders 34 greift in eine entsprechende Bohrung 37, vorzugsweise eine Durchgangsbohrung, im Halterungsunterteil 12 ein. Durch den Rastverbinder 34 erfolgt auch eine unlösbare Verbindung des Halterungsoberteils 13 mit dem Halterungsunterteil 12. Diese Verbindung ist vor allem deshalb unlösbar, weil der Rastverbinder 34 wie der Rastvorsprung unter dem Gehäuse 30 des elektronischen ldentifikationsmittels 29 in der Rückseite des Halterungsunterteils 12 formschlüssig verankert ist und diese Rückseite wegen der dauerhaft unlösbaren Befestigung des Halterungsunterteils 12 am Kraftfahrzeug nach der Montage des erfindungsgemäßen Kraftfahrzeugkennzeichens nicht mehr zugänglich ist.

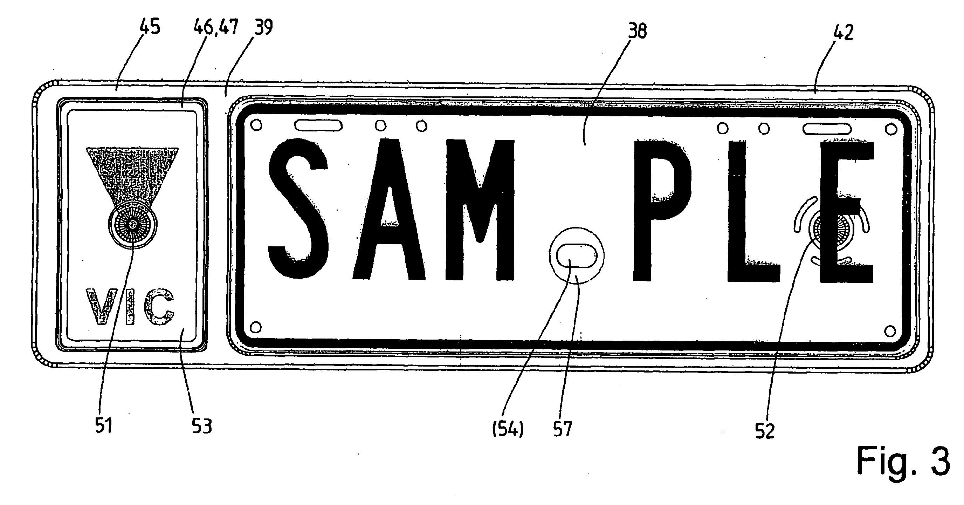

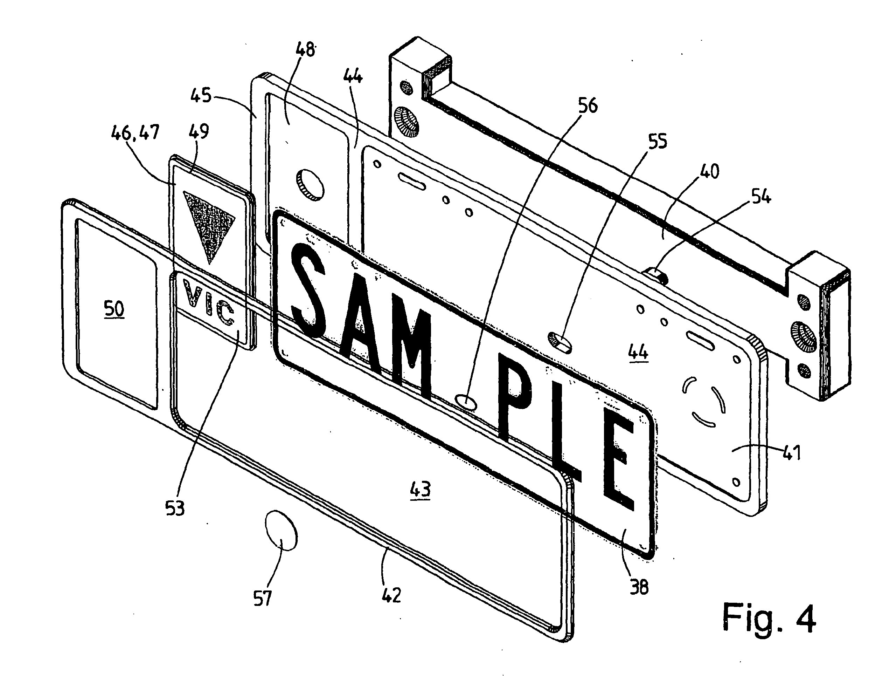

Die Fig. 3 und 4 zeigen ein Kraftfahrzeugkennzeichen mit einem Kennzeichenschild 38 und eine dieses tragende dreiteilige Halterung 39. Die Halterung 39 weist wie die zuvor beschriebene Halterung 11 ein Halterungsunterteil 40 und ein Halterungsoberteil 41 auf. Darüber hinaus weist die Halterung 39 noch einen Rahmen 42 auf. Der Rahmen 42 ist vor dem Halterungsoberteil 41 befestigt, wobei diese Befestigung auf beliebige Weise geschehen kann, weil sie nicht unlösbar sein muss. Der Rahmen 42 weist eine Freifläche 43 auf, die mit der rechteckigen Fläche des Kennzeichenschilds 38 korrespondiert, nämlich etwas größer ist. Dadurch rahmt der die Freifläche 43 umgebende Teil des Rahmens 42 das Kennzeichenschild 38 ein.

Wie beim Kraftfahrzeugkennzeichen der Fig. 1 und 2 ist das Halterungsunterteil 40 unlösbar durch Schrauben, Niete oder sonstige Verbindungen mit dem Kraftfahrzeug, beispielsweise der Karosserie, einer Stoßstange oder dergleichen verbunden. Diese Verbindung erfolgt von der Rückseite des Halterungsunterteils 40 her vom Inneren des Kraftfahrzeugs oder beispielsweise bei abmontierter Stoßstange. Bei verschlossenem Kraftfahrzeug und montierter Stoßstange ist daher die Rückseite des Halterungsunterteils 40 nicht mehr zugänglich, so dass diese vom Kraftfahrzeug jedenfalls nicht mehr von Unbefugten lösbar ist.

Das Kennzeichenschild 38 ist wie das Kennzeichenschild 10 durch nicht gezeigte Raststifte mit der Vorderseite 44 des Halterungsoberteils 41 unlösbar verbunden.

Die Halterung 39 ist deutlich breiter ausgebildet als das Kennzeichenschild 38, wodurch neben dem Kennzeichenschild 38 die Halterung 39 eine vom Kennzeichenschild 38 nicht verdeckte Seitenfläche 45 aufweist. Im Bereich dieser Seitenfläche 45 ist dem gezeigten Kraftfahrzeugkennzeichen ein elektronisches Identifikationsmittel 46 zugeordnet. Dieses kann so aufgebaut sein wie das Identifikationsmittel 29, so dass auf die Beschreibung desselben im Zusammenhang mit dem Ausführungsbeispiel der Fig. 1 und 2 Bezug genommen wird. Auch das elektrische Identifikationsmittel 46 ist in einem geschlossenen und nicht zu öffnenden Gehäuse 47 angeordnet. Das Gehäuse 47 mit dem Identifikationsmittel 46 ist untergebracht in einer von der Vorderseite 44 des Halterungsoberteils 41 ausgehenden Ausnehmung 48. Die Ausnehmung 48 ist korrespondierend zum Gehäuse 47 ausgebildet, und zwar insbesondere so, dass eine ebene Oberseite 49 des Gehäuses 47 mit der Vorderseite 44 des Halterungsoberteils 41 etwa bündig abschließt. Der Rahmen 42 weist eine zweite, kleinere Freifläche 50 auf, die die Seitenfläche 45 des Halterungsoberteils 41 umrahmt und dadurch auch das Gehäuse 47 zur Aufnahme des elektronischen Identifikationsmittels 46 umgibt. Aufgrund dessen ist es auch denkbar, das Gehäuse 47 so auszubilden, dass es gegenüber der Vorderseite 44 des Halterungsoberteils 41 wie das Kennzeichenschild 38 vorsteht, so dass die Oberseite 49 des Gehäuses 47 nicht bündig mit der Vorderseite 44 des Halterungsoberteils 41 abschließt.

Die das Gehäuse 47 des elektronischen Identifikationsmittels 46 umgebenden Ränder sind gestuft, und zwar so, dass das Gehäuse 47 von oben in die Ausnehmung 48 rastend eingesetzt werden kann. Alternativ kann bei einer durchgehenden Ausnehmung 48 das Gehäuse 47 mit den gestuften Rändern von hinten in die Ausnehmung 48 eingesetzt werden, so dass das Gehäuse 47 mit dem elektronischen Identifikationsmittel 46 formschlüssig zwischen dem unlösbar miteinander verbundenen Halterungsoberteil 41 und dem Halterungsunterteil 40 eingebettet ist.

Im gezeigten Ausführungsbeispiel, wo das Gehäuse 47 in eine nicht durchgehende Ausnehmung 48 des Halterungsoberteils 41 eingesetzt wird, verfügt das Gehäuse 47 an der Rückseite über einen Rastvorsprung, der wie der Rastvorsprung des zuvor beschriebenen Kraftfahrzeugkennzeichens ausgebildet ist und zur formschlüssigen rastenden Verbindung des Gehäuses 47 und des Halterungsunterteils 40 mit dem Halterungsoberteil 41 dient, wobei das Gehäuse 47 sozusagen den Kopf des Rastvorsprungs bildet. Unter dem Kennzeichenschild 38 auf der dem Gehäuse 47 für das elektronischen Identifikationsmittel 46 gegenüberliegenden Seite der Halterung 39 ist ein separater Rastverbinder vorgesehen, der wie der Rastverbinder 34 ausgebildet ist. Der Rastverbinder führt eine zweite rastende und somit formschlüssige Verbindung des Halterungsunterteils 40 mit dem Hafterungsoberteil 41 herbei.

Auf der Oberseite 49 des Gehäuses 47 für das elektronische Identifikationsmittel 46 ist ein Aufkleber 53 aufgebracht. Der Aufkleber 53 erstreckt sich nur im Bereich der Oberseite 49 des Gehäuses 47, ist vorzugsweise etwas kleiner. Alternativ ist es auch denkbar, die Oberseite des Gehäuses 47 zu bedrucken. Denkbar ist es aber auch, den Aufkleber 53 wie den Aufkleber 32 des Kraftfahrzeugkennzeichens der Fig. 1 und 2 auszubilden, so dass dieser einen die Ausnehmung 48 im Halterungsoberteil 41 umgebenden Randbereich der Vorderseite 44 des Halterungsoberteils 41 überdeckt und dadurch der Aufkleber eine Art Siegelverbindung zwischen dem Halterungsoberteil 41 und dem Gehäuse 47 bildet, wie das auch bei dem Aufkleber 32 der Fall ist.

Das in den Fig. 3 und 4 gezeigte Kraftfahrzeugkennzeichen verfügt über einen gegenüber dem Halterungsunterteil 40 nach oben vorstehenden Vorsprung 54, der durch einen Durchbruch 55 im Halterungsoberteil 41 und einen Durchbruch 56 im Kennzeichenschild 38 sich hindurcherstreckt. Die Oberseite des Vorsprungs 54 und ein den Durchbruch 55 im Kennzeichenschild 38 umgebender Randbereich desselben sind überdeckt durch einen Aufkleber 57. Der Vorsprung 54 und der Aufkleber 57 haben die gleiche Aufgabe wie der Aufkleber 22 des Kraftfahrzeugkennzeichens nach dem Ausführungsbeispiel der Fig. 1 und 2. Nur ist abweichend von diesem Ausführungsbeispiel der Vorsprung 54 mit einer ovalen Grundfläche versehen.

Es ist eine Abwandlung der in den Fig. 3 und 4 gezeigten Kraftfahrzeugkennzeichens derart denkbar, dass dieses keinen Vorsprung und somit auch keine Durchbrüche 55 und 56 und keinen Aufkleber 57 aufweist.

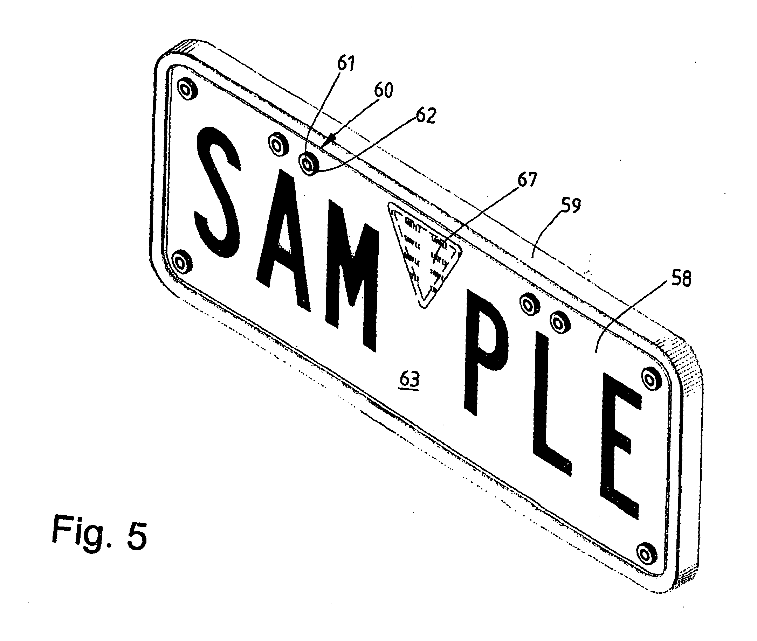

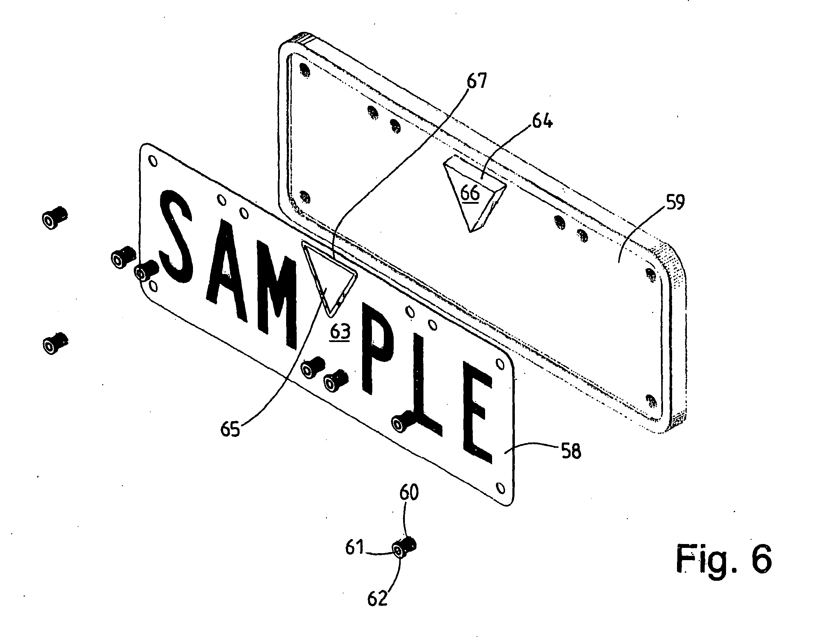

Die Fig. 5 und 6 zeigen ein drittes Ausführungsbeispiel eines Kraftfahrzeugkennzeichens. Dieses Kraftfahrzeugkennzeichen weist ein Kennzeichenschild 58 und eine einteilige Halterung 59 auf. Das Kennzeichenschild 58 ist unlösbar vor der Halterung 59 befestigt mit Raststiften 60, die wie die Raststifte 24 ausgebildet sind. Die Rastungen sind durch zylindrische Füllkörper 61 im inneren Hohlraum des jeweiligen Raststifts 60 unlösbar gemacht. Die Raststifte 60 liegen mit einem Kopf 62 auf der Vorderseite 63 des Kennzeichenschilds 58 an. Die formschlüssige Verrastung der Raststifte 60 findet im Inneren der einlagigen Halterung 59 statt.

Die Halterung 59 ist auf der zum Kennzeichenschild 58 weisenden Vorderseite mit einem Vorsprung 64 versehen. Der Vorsprung 64 ist entweder einstückig an der Grundplatte der Halterung 59 angeformt oder mit dieser Grundplatte unlösbar verbunden durch Kleben, Schweißen, Schrauben und/oder Nieten.

Der gezeigte Vorsprung 64 weist wie der Vorsprung 17 eine dreieckförmige Grundfläche auf. Der Vorsprung 64 kann aber auch über beliebige andere Grundflächen verfügen. Dem Kennzeichenschild 58 ist ein mit der Grundfläche des Vorsprungs 64 korrespondierender, dreieckförmiger Durchbruch 65 angeordnet. Der Durchbruch 65 befindet sich nahe des oberen Längsrandes des Kennzeichenschilds 58, und zwar in der Mitte desselben. Durch den Durchbruch 65 ragt bei mit der Halterung 59 verbundenen Kennzeichenschild 58 der Vorsprung 64 hindurch. Der Vorsprung 64 ist dabei so bemessen, dass seine ebene dreieckförmige Oberseite 66 bündig mit der sichtbaren Vorderfläche des Kennzeichenschilds 58 abschließt.

Wie beim ersten Ausführungsbeispiel ist dem Vorsprung 64 ein Aufkleber 67 zugeordnet. Der Aufkleber 67 ist größer als die Fläche des Vorsprungs 64, so dass der Aufkleber 67 teilweise auch das Kennzeichenschild 58 überlappt. Im gezeigten Ausführungsbeispiel weist der Aufkleber 67 auch eine etwa dreieckförmige Gestalt auf, wobei ein gegenüber dem Vorsprung 64 vorstehender, umlaufender Rand des Aufklebers 67 einen den Durchbruch 65 umgebenden Randbereich des Kennzeichenschilds 58 überdeckt. Auf diese Weise verbindet der Aufkleber 67 das Kennzeichenschild 58 mit der Oberseite 66 des Vorsprungs 64 und dadurch auch mit der Halterung 59.

Der Aufkleber 67 ist wie zuvor im Zusammenhang mit dem Aufkleber 22 beschrieben aus einer ein- oder vorzugsweise mehrschichtigen Folie gebildet, die beim Versuch, den Aufkleber 67 vom Kennzeichenschild 58 und/oder den Vorsprung 64 zu entfernen, zerstört wird, indem sie z.B. einreißt. Gleiches gilt für den Fall, dass versucht werden sollte, auch das Kennzeichenschild 58 von der Halterung 59 zu entfernen. Demzufolge ist auch am hier gezeigten Kraftfahrzeugkennzeichen das Kennzeichenschild 58 unlösbar mit der Halterung 59 verbunden. Auf jeden Fall lässt sich der Aufkleber 67 nicht wiederverwenden, wenn gewaltsam das Kennzeichenschild 58 von der Halterung 59 entfernt worden sein sollte.

Die in den Fig. 5 und 6 gezeigte einschichtige bzw. einteilige Halterung 59 verfügt über kein elektronisches Identifikationsmittel. Es ist auch denkbar, dieser einschichtigen Halterung 59 bei Bedarf ein elektronisches Identifikationsmittel zuzuordnen, das wie die im Zusammenhang mit den vorigen Ausführungsbeispielen der Erfindung beschriebenen elektronischen Identifikationsmittel 29 oder 46 ausgebildet sein kann.

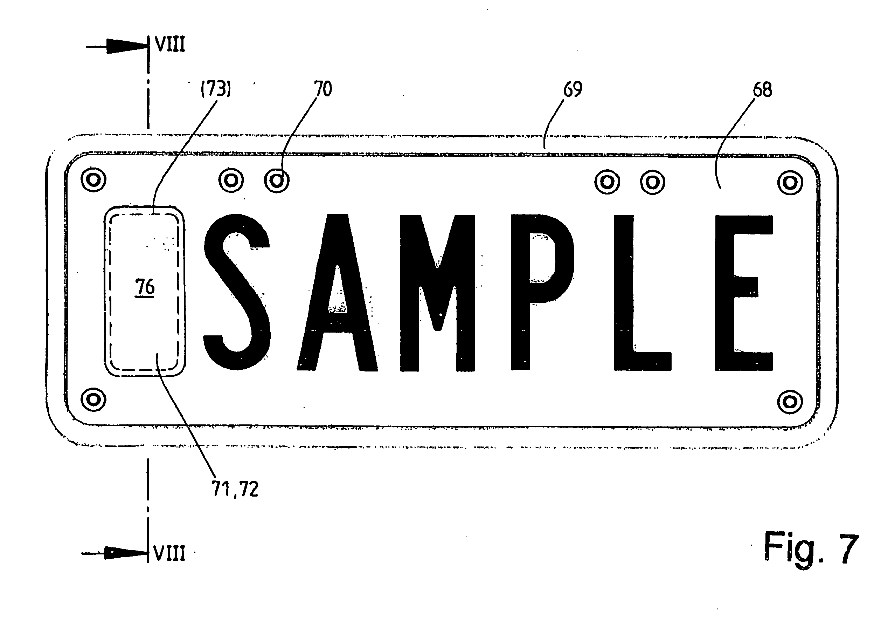

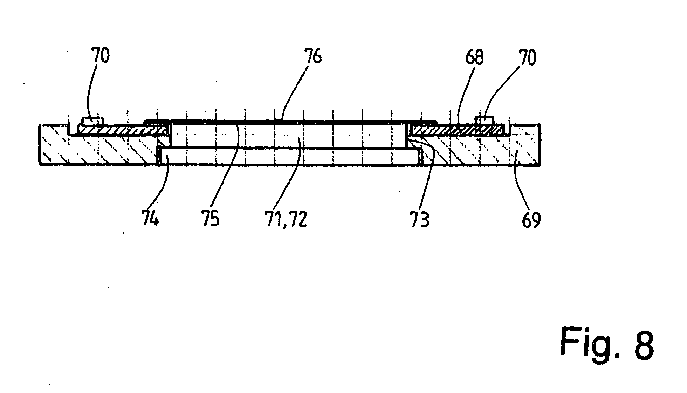

Schließlich zeigen die Fig. 7 und 8 ein Kraftfahrzeugkennzeichen nach einem weiteren Ausführungsbeispiel der Erfindung, bei dem ein Kennzeichenschild 68 ebenfalls unlösbar mit einer einschichtigen bzw. einlagigen Halterung 69 verbunden ist. Das geschieht wiederum durch mehrere Raststifte 70, die wie die Raststifte 24 ausgebildet und gleichermaßen über einen Kopf und einen Füllkörper verfügen. Hinsichtlich der konkreten Ausbildung der Raststifte 70 wird auf die Raststifte 24 des ersten Ausführungsbeispiels der Erfindung Bezug genommen.

Das Kraftfahrzeugkennzeichen der Fig. 7 und 8 weist ein elektronisches Identifikationsmittel 71 auf. Auch dieses kann wie ein Transponder arbeiten und aufgebaut sein. Zu den Einzelheiten des Identifikationsmittels 71 wird auf die Beschreibung des Identifikationsmittels 29 des Kraftfahrzeugkennzeichens nach dem ersten Ausführungsbeispiel der Erfindung verwiesen.

Auch das elektronische Identifikationsmittel 71 ist in einem vollständig geschlossenen Gehäuse 72 angeordnet, von dem das elektronische Identifikationsmittel 71 hermetisch umgeben ist und sich nicht öffnen lässt. In der Halterung 69 befindet sich ein Durchbruch 73, der korrespondierend zum Gehäuse 72 mit einer rechteckförmigen Grundfläche ausgebildet ist. Der Durchbruch 73 ist gestuft, nämlich mit einer teilweise oder umlaufenden Aufweitung versehen, die von der dem Kennzeichenschild 78 gegenüberliegenden Rückseite der Halterung 69 ausgeht. Das Gehäuse 72 zur Aufnahme des elektronischen Identifikationsmittels 71 weist einen korrespondierend zur Aufweitung im Durchbruch 74 ausgebildeten Kragen 74 auf. Dadurch kann das Gehäuse 72 von der Rückseite in die Halterung 69 eingeschoben werden, wobei das Gehäuse 72 formschlüssig gegen Herausziehen in Richtung zur Vorderseite der Halterung 69 gesichert ist. Das Gehäuse 72 mit dem elektronischen Identifikationsmittel 71 wird in den Durchbruch 73 der Halterung 69 eingesetzt, bevor die Halterung 69 am Kraftfahrzeug dauerhaft und unlösbar verbunden wird. Auf diese Weise ist das Gehäuse 72 zur Aufnahme des elektronischen Identifikationsmittels 71 formschlüssig und nicht demontierbar zwischen der Halterung 69 und dem diese tragenden Karosserieteil oder der Stoßstange des Kraftfahrzeugs befestigt.

Das Gehäuse 72 ist in der Höhe so bemessen, dass eine ebene Oberseite 75 desselben etwa bündig mit einer sichtbaren Vorderseite des Kennzeichenschilds 68 abschließt (Fig. 8). Auf der Oberseite 75 des Gehäuses 72 ist wiederum ein Aufkleber 76 angeordnet, der einen den Durchbruch 73 im Kennzeichenschild 68 umgebenden Randbereich des Kennzeichenschilds 68 überlappt (Fig. 8). Auf Grund dieser Überlappung kommt es wie auch bei den zuvor beschriebenen Ausführungsbeispielen der Erfindung zu einer unlösbaren Verbindung des Gehäuses 72 mit dem Kennzeichenschild 68. Dazu ist der Aufkleber 76 auf der Oberseite 75 des Gehäuses 72 zur Aufnahme des elektronischen Identifikationsmittels 71 und den den Durchbruch 73 umgebenden Randbereich des Kennzeichenschilds 68 dauerhaft aufgeklebt. Diese Klebeverbindung ist so beschaffen, dass sich der Aufkleber 76 vom Kennzeichenschild 68 und vom Gehäuse 72 für das elektronische Identifikationsmittel 71 nicht zerstörungslos trennen lässt. Dazu ist der Aufkleber 76 so ausgebildet, wie das im Zusammenhang mit den Aufklebern der zuvor beschriebenen Ausführungsbeispiele der Erfindung erläutert worden ist.

Die Halterungen aller zuvor beschriebenen Ausführungsbeispiele der erfindungsgemäßen Kraftfahrzeugkennzeichen sind vorzugsweise vollständig aus Kunststoff gebildet. Gleiches gilt für die Vorsprünge und die Gehäuse zur Aufnahme der elektronischen Identifikationsmittel. Die Kennzeichenschilder der erfindungsgemäßen Kraftfahrzeugkennzeichen können aus allen gängigen Materialien gebildet sein, also Stahlblech, Aluminiumblech, Kunststoffplatten oder sogar ein- oder mehrschichtigen Folien.

Die visuellen Kennzeichen der Kennzeichenschilder, die in allen Ausführungsbeispielen zu Erläuterungszwecken lediglich als "Sample" bezeichnet sind, werden wie üblich hergestellt, nämlich beispielsweise durch Prägen, Aufkleben, Aufnieten oder Aufdrucken. Es kann auch eine entsprechend beschriftete Folie auf einen ebenflächigen Träger aus Blech, Aluminium oder Kunststoff aufgeklebt sein. Die Folie bildet dann gleichzeitig auch die Aufkleber der zuvor beschriebenen Ausführungsbeispiele der erfindungsgemäßen Kraftfahrzeugkennzeichen, die sich dann vollflächig über das Kennzeichenschild erstrecken, aber auch nicht zerstörungsfrei lösbar sind.

### Bezugszeichenliste

- 10: Kennzeichenschild
- 11: Halterung
- 12: Halterungsunterteil
- 13: Halterungsoberteil
- 15: Vorderseite
- 17: Vorsprung
- 18: Durchbruch
- 19: Durchbruch
- 20: Oberseite
- 21: Vorderseite
- 22: Aufkleber
- 23: Durchgangsbohrung
- 24: Raststift
- 25: Kopf
- 26: Füllkörper
- 27: Seitenfläche
- 28: Ausnehmung
- 29: Identifikationsmittel
- 30: Gehäuse
- 31: Oberseite
- 32: Aufkleber
- 34: Rastverbinder
- 35: Kopf
- 36: Ausnehmung
- 37: Bohrung
- 38: Kennzeichenschild
- 39: Halterung
- 40: Halterungsunterteil
- 41: Halterungsoberteil
- 42: Rahmen
- 43: Freifläche
- 44: Vorderseite
- 45: Seitenfläche
- 46: Identifikationsmittel
- 47: Gehäuse
- 48: Ausnehmung
- 49: Oberseite
- 50: Freifläche
- 53: Aufklebers
- 54: Vorsprung
- 55: Durchbruch
- 56: Durchbruch
- 57: Aufkleber
- 58: Kennzeichenschild
- 59: Halterung
- 60: Raststift
- 61: Füllkörper
- 62: Kopf
- 63: Vorderseite
- 64: Vorsprung
- 65: Durchbruch
- 66: Oberseite
- 67: Aufkleber
- 68: Kennzeichenschild
- 69: Halterung
- 70: Raststift
- 71: Identifikationsmittel
- 72: Gehäuse
- 73: Durchbruch
- 74: Kragen
- 75: Oberseite
- 76: Aufkleber

## Patentansprüche

1. Kraftfahrzeugkennzeichen mit einem Kennzeichenschild (10, 38, 58, 68) und einer dieses tragenden Halterung (11, 39, 59, 69), wobei die Halterung (11, 39, 59, 69) mindestens einen Vorsprung (17, 54, 64) aufweist, **dadurch gekennzeichnet, dass** das Kennzeichenschild (10, 38, 58, 68) mit wenigstens einem zum jeweiligen Vorsprung (17, 54, 64) korrespondierenden Durchbruch (18, 56, 65) für den Vorsprung (17, 54, 64) versehen ist und der Vorsprung (17, 54, 64) sowie ein diesen umgebender Randbereich des Durchbruchs (18, 56, 65) mit einem Aufkleber (22, 57, 67) versehen sind.

2. Kraftfahrzeugkennzeichen nach Anspruch 1, **dadurch gekennzeichnet, dass** der Aufkleber (22, 57, 67) so ausgebildet ist, dass er sich nur in Teilen vom Vorsprung (17, 54, 64) der Halterung (11, 39, 59, 69) und den diesen umgebenden Randbereich um den Durchbruch (18, 56, 65) des Kennzeichenschilds (10, 38, 58, 68) lösen lässt.

3. Kraftfahrzeugkennzeichen nach Anspruch 1 oder 2, **dadurch gekennzeichnet, dass** eine eben ausgebildete Oberseite (20, 66) des Vorsprungs (17, 54, 64) etwa bündig mit der sichtbaren Vorderseite des Kennzeichenschilds (10, 38, 58, 68) abschließt.

4. Kraftfahrzeugkennzeichen nach einem der vorhergehenden Ansprüche, **dadurch gekennzeichnet, dass** auf die ebene Oberseite (20, 66) des Vorsprungs (17, 54, 64) ein innerer Bereich des Aufklebers (22, 57, 67) unlösbar aufgeklebt ist.

5. Kraftfahrzeugkennzeichen nach einem der vorhergehenden Ansprüche, **dadurch gekennzeichnet, dass** der jeweilige Vorsprung (17, 54, 64) integraler Bestandteil der Halterung (11, 39, 59, 69) ist, vorzugsweise einstückig an die Halterung (11, 39, 59, 69) angeformt oder hiermit unlösbar verbunden ist.

6. Kraftfahrzeugkennzeichen nach einem der vorhergehenden Ansprüche, **dadurch gekennzeichnet, dass** das Kennzeichenschild (10, 38, 58, 68) formschlüssig mit der Halterung (11, 39, 59, 69) unlösbar verbunden ist, vorzugsweise durch mehrere stiftartige Befestigungsmittel, die durch jeweils eine Bohrung im Kennzeichenschild (10, 38. 58, 68) hindurchgesteckt und in der jeweiligen Halterung (11, 39, 59, 69) formschlüssig verankert sind.

7. Kraftfahrzeugkennzeichen nach einem der vorhergehenden Ansprüche, **dadurch gekennzeichnet, dass** der Halterung (11, 39, 59, 69) wenigstens ein elektronisches Identifikationsmittel (29, 46, 71), vorzugsweise nach Art eines Transponders, zugeordnet ist.

8. Kraftfahrzeugkennzeichen nach Anspruch 7, **dadurch gekennzeichnet, dass** das elektronische Identifikationsmittel (29, 46, 71) unlösbar mit der Halterung (11, 39, 59, 69) verbunden ist.

9. Kraftfahrzeugkennzeichen nach Anspruch 7 oder 8, **dadurch gekennzeichnet, dass** das elektronische Identifikationsmittel (29, 46, 71) in einem Gehäuse (30, 47, 72) angeordnet ist, wobei das Gehäuse (30, 47, 72) vorzugsweise in einer korrespondierenden Vertiefung In der Vorderseite der Halterung (11, 39, 69) angeordnet ist.

10. Kraftfahrzeugkennzeichen nach einem der vorhergehenden Ansprüche, **dadurch gekennzeichnet, dass** die jeweilige Vertiefung für das Gehäuse (30, 47, 72) des elektrischen Identifikationsmittels (29, 46, 71) in einem Kennzeichenschild (10, 38) freigelassen im Bereich der Vorderseite der Halterung (11, 39) angeordnet ist.

11. Kraftfahrzeugkennzeichen nach einem der vorhergehenden Ansprüche, **dadurch gekennzeichnet, dass** eine vorzugsweise eben ausgebildete Oberseite des Gehäuses (30, 47, 72) des elektronischen Identifikationsmittels (29, 46, 71) etwa bündig mit der Vorderseite der Halterung (11, 39, 59, 69) abschließt.

12. Kraftfahrzeugkennzeichen nach einem der vorhergehenden Ansprüche, **dadurch gekennzeichnet, dass** die Oberseite des Gehäuses (30, 47, 72) und ein die Vertiefung für das Gehäuse (30, 47, 72) umgebender Randbereich der Vorderseite der Halterung (11, 39, 59, 69) von einem Aufkleber (22, 57, 67) verdeckt sind, der vorzugsweise unlösbar mit der Oberseite des Gehäuses (30, 47, 72) und dem dieses umgebenden Randbereich der Halterung (11, 39, 59, 69) verbunden ist.

13. Kraftfahrzeugkennzeichen mit einem Kennzeichenschild (10, 38) und eine dieses tragende Halterung (11, 39), nach mindestens einem der vorhergehenden Ansprüche, **dadurch gekennzeichnet, dass** die Halterung (11, 39) mehrteilig ausgebildet ist, indem die Halterung (11, 39) mindestens aus einem Halterungsunterteil (12, 40) und einem damit verbundenen Halterungsoberteil (13, 41) gebildet ist.

14. Kraftfahrzeugkennzeichen nach Anspruch 13, **dadurch gekennzeichnet, dass** das Halterungsunterteil (12, 40) und das Halterungsoberteil (13, 41) unlösbar, vorzugsweise formschlüssig, miteinander verbunden sind.

15. Kraftfahrzeugkennzeichen nach Anspruch 14, **dadurch gekennzeichnet, dass** das Halterungsunterteil (12, 40) und das Halterungsoberteil (13, 41) durch mehrere stiftartige Verbindungsmittel formschlüssig, vorzugsweise rastend, unlösbar verbunden sind.

16. Kraftfahrzeugkennzeichen nach Anspruch 15, **dadurch gekennzeichnet, dass** die stiftartigen Verbindungsmittel durch das Halterungsoberteil (13, 41) hindurchgeführt und rastend im Halterungsunterteil (12, 40) verbunden sind.

17. Kraftfahrzeugkennzeichen nach einem der Ansprüche 7 bis 16, **dadurch gekennzeichnet, dass** das elektronische Identifikationsmittel (29, 46) dem Halterungsoberteil (13, 41) zugeordnet ist, vorzugsweise in einer korrespondierenden Vertiefung des Halterungsoberteils (13, 41) untergebracht ist.

18. Kraftfahrzeugkennzeichen nach Anspruch 17, **dadurch gekennzeichnet, dass** das elektronische Identifikationsmittel (29, 46) mit der Vertiefung des Halterungsoberteils (13, 41) vom stiftförmigen Verbindungsmittel zur Verbindung des Halterungsoberteils (13, 41) mit dem Halterungsunterteil (12, 40) formschlüssig verbunden ist.

19. Kraftfahrzeugkennzeichen nach einem der vorhergehenden Ansprüche, **dadurch gekennzeichnet, dass** der mindestens eine Vorsprung (17, 54) auf dem Halterungsunterteil (12, 40) vorgesehen ist und sich durch eine korrespondierende Ausnehmung im Halterungsoberteil (13, 41) hindurch in den korrespondierenden Durchbruch (18, 56) im Kennzeichenschild (10, 38) hinein erstreckt, wobei der Vorsprung (17, 54) und ein den Durchbruch (18, 56) umgebender Randbereich des Kennzeichenschilds (10, 38) von dem Aufkleber (22, 57) überdeckt sind.

20. Kraftfahrzeugkennzeichen mit einem Kennzeichenschild (68) und einer dieses tragenden Halterung (69), vorzugsweise nach mindestens einem der vorhergehenden Ansprüche, sowie mindestens einem elektronischen Identifikationsmittel (71) **dadurch gekennzeichnet, dass** das mindestens eine elektronische Identifikationsmittel (71) der Halterung (69) zugeordnet ist, das Kennzeichenschild (68) einen Durchbruch (73) aufweist, in den das elektronische Identifikationsmittel (71) teilweise hineinragt, und das elektronische Identifikationsmittel (71) sowie ein den Durchbruch (73) umgebender Randbereich des Kennzeichenschilds (68) und/oder der Halterung (69) von einem Aufkleber (76) verdeckt sind.

21. Kraftfahrzeugkennzeichen nach einem der vorhergehenden Ansprüche, **dadurch gekennzeichnet, dass** das elektronische Identifikationsmittel (71) in einem Gehäuse (72) angeordnet ist, das mindestens zum Teil eine ebene Oberseite aufweist, die korrespondierend zum Durchbruch (73) im Kennzeichenschild (68) ausgebildet ist und etwa bündig mit einer Vorderseite des Kennzeichenschilds (68) abschließt.

22. Kraftfahrzeugkennzeichen nach einem der vorhergehenden Ansprüche, **dadurch gekennzeichnet, dass** das Gehäuse (72) zur Aufnahme des mindestens eines elektronischen Identifikationsmittels (71) in einer Ausnehmung in der Halterung (69) angeordnet und vorzugsweise unlösbar mit der Halterung (69) verbunden ist, vorzugsweise unlösbar in der Ausnehmung der Halterung (69) befestigt ist.

## Claims

1. A motor vehicle license plate arrangement having a license plate (10, 38, 58, 68) and a fixture (11, 39, 59, 69) which supports it, with the fixture (11, 39, 59, 69) having at least one projection (17, 54, 64), **characterized in that** the license plate (10, 38, 58, 68) is provided with at least one breakthrough (18, 56, 65), corresponding to the respective projection (17, 54, 64), for the projection (17, 54, 64), and the projection (17, 54, 64) and an edge area, surrounding the latter, of the breakthrough (18, 56, 65) are provided with a sticker (22, 57, 67).

2. The motor vehicle license plate arrangement as claimed in claim 1, **characterized in that** the sticker (22, 57, 67) is embodied in such a way that it can only be detached in parts from the projection (17, 54, 64) of the fixture (11, 39, 59, 69) and the edge region, surrounding said projection (, 54, 64), around the breakthrough (18, 56, 65) in the license plate (10, 38, 58, 68).

3. The motor vehicle license plate arrangement as claimed in claim 1 or 2, **characterized in that** an upper side (20, 66), of planar design, of the projection (17, 54, 64) terminates approximately flush with the visible front side of the license plate (10, 38, 58, 68).

4. The motor vehicle license plate arrangement as claimed in one of the preceding claims, **characterized in that** an inner region of the sticker (22, 57, 67) is nondetachably bonded onto the planar upper side (20, 66) of the projection (17, 54, 64).

5. The motor vehicle license plate arrangement as claimed in one of the preceding claims, **characterized in that** the respective projection (17, 54, 64) is an integral component of the fixture (11, 39, 59, 69), and is preferably integrally moulded onto the fixture (11, 39, 59, 69) or nondetachably connected thereto.

6. The motor vehicle license plate arrangement as claimed in one of the preceding claims, **characterized in that** the license plate (10, 38, 58, 68) is connected to the fixture (11, 39, 59, 69) in a nondetachable, positive locking fashion, preferably by a plurality of pin-like attachment means which are each plugged through a bore in the license plate (10, 38, 58, 68) and anchored in the respective fixture (11, 39, 59, 69) in a positive locking fashion.

7. The motor vehicle license plate arrangement as claimed in one of the preceding claims, **characterized in that** at least one electronic identification means (29, 46, 71), preferably of a transponder type, is assigned to the fixture (11, 39, 59, 69).

8. The motor vehicle license plate arrangement as claimed in claim 7, **characterized in that** the electronic identification means (29, 46, 71) is nondetachably connected to the fixture (11, 39, 59, 69).

9. The motor vehicle license plate arrangement as claimed in claim 7 or 8, **characterized in that** the electronic identification means (29, 46, 71) is arranged in a housing (30, 47, 72), the housing (30, 47, 72) preferably being arranged in a corresponding depression in the front side of the fixture (11, 39, 69).

10. The motor vehicle license plate arrangement as claimed in one of the preceding claims, **characterized in that** the respective depression for the housing (30, 47, 72) of the electrical identification means (29, 46, 71) is arranged in the region of the front side of the fixture (11, 39) which is kept free in a license plate (10, 38).

11. The motor vehicle license plate arrangement as claimed in one of the preceding claims, **characterized in that** an upper side, of preferably planar design, of the housing (30, 47, 72) of the electronic identification means (29, 46, 71) terminates approximately flush with the front side of the fixture (11, 39, 59, 69).

12. The motor vehicle license plate arrangement as claimed in one of the preceding claims, **characterized in that** the upper side of the housing (30, 47, 72) and an edge region, surrounding the depression for the housing (30, 47, 72), of the front side of the fixture (11, 39, 59, 69) are covered by a sticker (22, 57, 67) which is preferably nondetachably connected to the upper side of the housing (30, 47, 72) and the edge region, surrounding said housing (30, 47, 72), of the fixture (11, 39, 59,69).

13. A motor vehicle license plate arrangement having a license plate (10, 38) and a fixture (11, 39) which supports it, as claimed in at least one of the preceding claims, **characterized in that** the fixture (11, 39) is of multi-part design **in that** the fixture (11, 39) is formed at least from a lower fixture part (12, 40) and an upper fixture part (13, 41) connected thereto.

14. The motor vehicle license plate arrangement as claimed in claim 13, **characterized in that** the lower fixture part (12, 40) and the upper fixture part (13, 41) are connected to one another in a nondetachable, preferably positive locking, fashion.

15. The motor vehicle license plate arrangement as claimed in claim 14, **characterized in that** the lower fixture part (12, 40) and the upper fixture part (13, 41) are nondetachably connected in a positive locking, preferably latching, fashion by a plurality of pin-like connecting means.

16. The motor vehicle license plate arrangement as claimed in claim 15, **characterized in that** the pin-like connecting means are made to pass through the upper fixture part (13, 41) and are connected in the lower fixture part (12, 40) in a latching fashion.

17. The motor vehicle license plate arrangement as claimed in one of the claims 7 to 16, **characterized in that** the electronic identification means (29, 46) is assigned to the upper fixture part (13, 41), and is preferably accommodated in a corresponding depression in the upper fixture part (13, 41).

18. The motor vehicle license plate arrangement as claimed in claim 17, **characterized in that** the electronic identification means (29, 46) is connected in a positive locking fashion to the depression in the upper fixture part (13, 41) of the pin-shaped connecting means in order to connect the upper fixture part (13, 41) to the lower fixture part (12, 40).

19. The motor vehicle license plate arrangement as claimed in one of the preceding claims, **characterized in that** the at least one projection (17, 54) is provided on the lower fixture part (12, 40) and extends through a corresponding cutout in the upper fixture part (13, 41) into the corresponding breakthrough (18, 56) in the license plate (10, 38), with the projection (17, 54) and an edge area, surrounding the breakthrough (18, 56), of the license plate (10, 38) being covered by the sticker (22, 57).

20. A motor vehicle license plate arrangement having a license plate (68) and a fixture (69) which supports it, preferably according to at least one of the preceding claims, and at least one electronic identification means (71), **characterized in that** the at least one electronic identification means (71) is assigned to the fixture (69), the license plate (68) has a breakthrough (73) into which the electronic identification means (71) partially projects, and the electronic identification means (71) and an edge region, surrounding the breakthrough (73), of the license plate (68) and/or of the fixture (69) are covered by a sticker (76).

21. The motor vehicle license plate arrangement as claimed in one of the preceding claims, **characterized in that** the electronic identification means (71) is arranged in a housing (72) which has, at least to a certain extent, a planar upper side which is designed so as to correspond to the breakthrough (73) in the license plate (68) and terminates approximately flush with a front side of the license plate (68).

22. The motor vehicle license plate arrangement as claimed in one of the preceding claims, **characterized in that** the housing (72) for receiving the at least one electronic identification means (71) is arranged in a recess in the fixture (69) and is preferably nondetachably connected to the fixture (69), being preferably nondetachably fastened in the recess of the fixture (69).

## Revendications

1. Immatriculation de véhicule automobile, comprenant une plaque d'immatriculation (10, 38, 58, 68) et une fixation (11, 39, 59, 69) la pourtant, la fixation (11, 39, 59, 69) présentant au moins une saillie (17, 54, 64), **caractérisée en ce que** la plaque d'immatriculation (10, 38, 58, 68) est pourvue d'au moins un perçage (18, 56, 65) correspondant à chaque saillie (17, 54, 64), pour la saillie (17, 54, 64), et la saillie (17, 54, 64) ainsi qu'une région de bord du perçage (18, 56, 65) l'entourant sont pourvues d'un autocollant (22, 57, 67).

2. Immatriculation de véhicule automobile selon la revendication 1, **caractérisée en ce que** l'autocollant (22, 57, 67) est réalisé de telle sorte qu'il ne puisse être détaché qu'en parties de la saillie (17, 54, 64) de la fixation (11, 39, 59, 69) et de la région de bord l'entourant autour du perçage (18, 56, 65) de à plaque d'immatriculation (10, 38, 58, 68).

3. Immatriculation de véhicule automobile selon la revendication 1 ou 2, **caractérisée en ce qu'**un côté supérieur réalisé sous forme plane (20, 66) de la saillie (17, 54, 64) se termine approximativement en affleurement avec le côté avant visible de la plaque d'immatriculation (10, 38, 58, 68).

4. Immatriculation de véhicule automobile selon l'une quelconque des revendications précédentes, **caractérisée en ce qu'**une région interné de l'autocollant (22, 57, 67) est collée de manière non détachable sur le côté supérieur plan (20, 66) de la saillie (17, 54, 64).

5. Immatriculation de véhicule automobile, **caractérisée en ce que** chaque saillie (17, 54, 64) fait partie intégrante de la fixation (11, 39, 59, 69), de préférence est façonnée d'une seule pièce sur la fixation (11, 39, 59, 69) ou est connectée de manière permanente à celle-ci.

6. Immatriculation de véhicule automobile selon l'une quelconque des revendications précédentes, **caractérisée en ce que** le panneau d'immatriculation (10, 38, 58, 68) est connecté de manière permanente par engagement par correspondance géométrique à la fixation (11, 39, 59, 69), de préférence par plusieurs moyens de fixation de type goupilles, qui sont enfichés à travers un alésage respectif dans le panneau d'immatriculation (10, 38, 58, 68) et qui sont ancrés par engagement par correspondance géométrique dans la fixation respective (11, 39, 59, 69).

7. Immatriculation de véhicule automobile selon l'une quelconque des revendications précédentes, **caractérisée en ce que** la fixation (11, 39, 59, 69) est associée à au moins un moyen d'identification électronique (29, 46, 71), de préférence à la manière d'un transpondeur.

8. Immatriculation de véhicule automobile selon la revendication 7, **caractérisée en ce que** le moyen d'identification électronique (29, 46, 71) est connecté de manière permanente à la fixation (11, 39, 59, 69).

9. Immatriculation de véhicule automobile selon la revendication 7 ou 8, **caractérisée en ce que** le moyen d'identification électronique (29, 46, 71) est disposé dans un boîtier (30, 47, 72), le boîtier (30, 47, 72) étant de préférence disposé dans un renfoncement correspondant dans le côté avant de la fixation (11, 39, 69).

10. Immatriculation de véhicule automobile selon l'une quelconque des revendications précédentes, **caractérisée en ce que** le renfoncement respectif pour le boîtier (30, 47, 72) du moyen d'identification électrique (29, 46, 71) est disposé dans un panneau d'immatriculation (10, 38) exposé dans la région du côté avant de la fixation (11, 39).

11. Immatriculation de véhicule automobile selon l'une quelconque des revendications précédentes, **caractérisée en ce qu'**un côté supérieur de préférence réalisé sous forme plane du boîtier (30, 47, 72) du moyen d'identification électronique (29, 46, 71) se termine approximativement en affleurement avec le côté avant de la fixation (11, 39, 59, 69).

12. Immatriculation de véhicule automobile selon l'une quelconque des revendications précédentes, **caractérisée en ce que** le côté supérieur du boîtier (30, 47, 72) et une région de bord du côté avant de la fixation (11, 39, 59, 69), entourant le renfoncement pour le boîtier (30, 47, 72), sont recouverts par un autocollant (22, 57, 67), qui est connecté de préférence de manière permanente au côté supérieur du boîtier (30, 47, 72) et à la région de bord l'entourant de la fixation (11, 39, 59, 69).

13. Immatriculation de véhicule automobile comprenant un panneau d'immatriculation (10, 38) et une fixation (11, 39) le portant, selon au moins l'une quelconque des revendications précédentes, **caractérisée en ce que** la fixation (11, 39) est réalisée en plusieurs parties, la fixation (11, 39) étant formée au moins à partir d'une partie inférieure de fixation (12, 40) et d'une partie supérieure de fixation (13, 41) connectée à celle-ci.

14. Immatriculation de véhicule automobile selon la revendication 13, **caractérisée en ce que** la partie inférieure de fixation (12, 40) et la partie supérieure de fixation (13, 41) sont connectées l'une à l'autre de manière permanente, de préférence par engagement par correspondance géométrique.

15. Immatriculation de véhicule automobile selon la revendication 14, **caractérisée en ce que** la partie inférieure de fixation (12, 40) et la partie supérieure de fixation (13, 41) sont connectées de manière permanente par plusieurs moyens de connexion de type goupille par engagement par correspondance géométrique, de préférence par encliquetage.

16. Immatriculation de véhicule automobile selon la revendication 15, **caractérisée en ce que** les moyens de connexion de type goupille sont guidés à travers la partie supérieur de fixation (13, 41) et sont connectés par encliquetage dans la partie inférieure de fixation (12, 40).

17. Immatriculation de véhicule automobile selon l'une quelconque des revendications 7 à 16, **caractérisée en ce que** le moyen d'identification électronique (29, 46) est associé à la partie supérieure de fixation (13, 41), de préférence est monté dans un renfoncement correspondant de la partie supérieure de fixation (13, 41).

18. Immatriculation de véhicule automobile selon la revendication 17, **caractérisée en ce que** le moyen d'identification électronique (29, 46) est connecté par engagement par correspondance géométrique avec le renfoncement de la partie supérieure de fixation (13, 41) du moyen de connexion en forme de goupille pour connecter la partie supérieur de fixation (13, 41) à la partie inférieure de fixation (12, 40).

19. Immatriculation de véhicule automobile selon l'une quelconque des revendications précédentes, **caractérisée en ce que** l'au moins une saillie (17, 54) est prévue sur la partie inférieure de fixation (12, 40), et s'étend à travers un évidement correspondant dans la partie supérieure de fixation (13, 41) dans le perçage correspondant (18, 56) dans le panneau d'immatriculation (10, 38), la saillie (17, 54) et une région de bord du panneau d'immatriculation (10, 38) entourant le perçage (18, 56) étant recouvertes par l'autocollant (22, 57).

20. Immatriculation de véhicule automobile comprenant un panneau d'immatriculation (68) et une fixation (69) le portant, de préférence selon au moins l'une quelconque des revendications précédentes, ainsi qu'au moins un moyen d'identification électronique (71), **caractérisée en ce que** l'au moins un moyen d'identification électronique (71) est associé à la fixation (69), le panneau d'immatriculation (68) présente un perçage (73) dans lequel pénètre partiellement le moyen d'identification électronique (71), et le moyen d'identification électronique (71) ainsi qu'une région de bord du panneau d'immatriculation (68) et/ou de la fixation (69), entourant le perçage (73), sont recouvertes par un autocollant (76).

21. Immatriculation de véhicule automobile selon l'une quelconque des revendications précédentes, **caractérisée en ce que** le moyen d'identification électronique (71) est disposé dans un boîtier (72) qui présente au moins en partie une côté supérieur plan, qui est réalisé de manière correspondant au perçage (73) dans le panneau d'immatriculation (68) et qui se termine approximativement en affleurement avec un côté avant du panneau d'immatriculation (68).

22. Immatriculation de véhicule automobile selon l'une quelconque des revendications précédentes, **caractérisée en ce que** le boîtier (72) est prévu pour recevoir l'au moins un moyen d'identification électronique (71) dans un évidement dans la fixation (69), et est connecté de préférence de manière permanente à la fixation (69), de préférence est fixé de manière permanente dans l'évidement de la fixation (69).
